(19) Europäisches Patentamt
European Patent Office
Office européen des brevets

(11) EP 1 376 069 A1

(12) **EUROPÄISCHE PATENTANMELDUNG**

(43) Veröffentlichungstag:
**02.01.2004 Patentblatt 2004/01**

(51) Int Cl.[7]: **G01F 1/66**

(21) Anmeldenummer: **03005243.5**

(22) Anmeldetag: **10.03.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **13.06.2002 DE 10226436**
**04.07.2002 DE 10230215**
**15.07.2002 DE 10232101**

(71) Anmelder: **Krohne AG**
**4019 Basel (CH)**

(72) Erfinder:
- **van Klooster, Jeroen Martin**
  **4003 DJ Tiel (NL)**
- **Huijer, Arie**
  **3363 BS Sliedrecht (NL)**

(74) Vertreter: **Gesthuysen, von Rohr & Eggert**
**Patentanwälte**
**Postfach 10 13 54**
**45013 Essen (DE)**

(54) **Ultraschalldurchflussmessverfahren**

(57) Dargestellt und beschrieben ist ein Ultraschalldurchflußmeßverfahren, zur Messung einer Strömungsgeschwindigkeit eines eine Meßleitung durchströmenden Mediums mittels zweier, in Strömungsrichtung des Mediums zueinander versetzt angeordneter Ultraschallwandler, wobei von beiden Ultraschallwandlern jeweils einerseits Ultraschallimpulse ausgesandt und andererseits von dem jeweilig anderen Ultraschallwandler ausgesandte Ultraschallimpulse empfangen werden und die Strömungsgeschwindigkeit auf der Grundlage der Laufzeiten der von dem einen bzw. dem anderen Ultraschallwandler empfangenen Ultraschallimpulse berechnet wird.

Erfindungsgemäß ist vorgesehen, daß auf der Grundlage der berechneten Schallausbreitung der von dem einen zum anderen Ultraschallwandler laufenden Ultraschallimpulse wenigstens ein Korrekturparameter ermittelt wird, die Berechnung der Schallausbreitung der von einem zum anderen Ultraschallwandler laufenden Ultraschallimpulse unter Berücksichtigung eines vorgegebenen Frequenzspektrums der Schwingungen der Ultraschallwandler erfolgt und die Strömungsgeschwindigkeit unter Berücksichtigung des ermittelten Korrekturparameters berechnet wird.

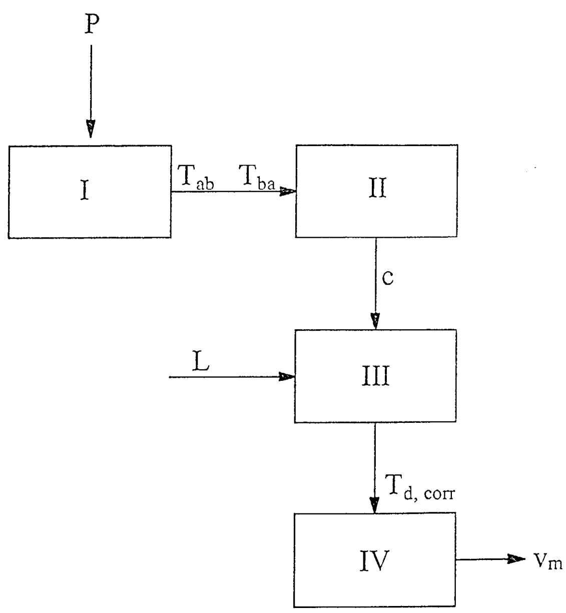


Fig. 5

EP 1 376 069 A1

## Beschreibung

Die Erfindung betrifft ein Ultraschalldurchflußmeßverfahren, zur Messung einer Strömungsgeschwindigkeit eines eine Meßleitung durchströmenden Mediums mittels zweier, in Strömungsrichtung des Mediums zueinander versetzt angeordneter Ultraschallwandler, wobei von beiden Ultraschallwandlern jeweils einerseits Ultraschallimpulse ausgesandt und andererseits von dem jeweilig anderen Ultraschallwandler ausgesandte Ultraschallimpulse empfangen werden und die Strömungsgeschwindigkeit auf der Grundlage der Laufzeiten der von dem einen bzw. dem anderen Ultraschallwandler empfangenen Ultraschallimpulse berechnet wird.

Zuvor heißt es, daß das Ultraschalldurchflußmeßverfahren zur Messung einer Strömungsgeschwindigkeit des durch die Meßleitung strömenden Mediums dient. Dazu ist folgendes anzumerken: Das die Meßleitung durchströmende Medium fließt typischerweise mit einem bestimmten Strömungsprofil, bei einer laminaren Strömung z. B. mit einem solchen Strömungsprofil, bei dem der radiale Gradient des Geschwindigkeitsverlaufs linear ist. Jedenfalls strömt das Medium an unterschiedlichen Punkten im Querschnitt der Meßleitung in der Regel mit voneinander verschiedenen Geschwindigkeiten, so daß es sich bei der gemessenen Strömungsgeschwindigkeit immer nur um eine längs des Meßpfads, also der Verbindung der beiden Ultraschallwandler, gemittelte Strömungsgeschwindigkeit handelt.

Diese gemittelte Strömungsgeschwindigkeit muß darüber hinaus nicht zwangsläufig die mittlere Strömungsgeschwindigkeit des gesamten Mediums in der Meßleitung sein, sondern ist abhängig von dem Verlauf des Meßpfads durch das Medium hindurch. Die mittlere Strömungsgeschwindigkeit des gesamten durch die Meßleitung strömenden Mediums wird nur dann durch eine Messung mit zwei Ultraschallwandlern ermittelt, wenn es sich bei der Meßleitung um eine rotationssymmetrische Leitung handelt, das Strömungsprofil ebenfalls rotationssymmetrisch ist und die Verbindungslinie der beiden Ultraschallwandler die Längsachse der Meßleitung schneidet.

Bezüglich der Meßleitung sei im übrigen angemerkt, daß diese typischerweise tatsächlich rotationssymmetrisch ist, deren Querschnitt also kreisförmig ist. Grundsätzlich kann der Querschnitt der Meßleitung jedoch beliebig sein. Die Meßleitung kann ferner einerseits als rundum geschlossenes Rohr andererseits aber auch als offenes Gerinne ausgebildet sein kann.

Das grundlegende Meßprinzip des eingangs beschriebenen Ultraschalldurchflußmeßverfahren beruht darauf, daß Ultraschallimpulse einerseits mit einer Geschwindigkeitskomponente in Richtung der Strömungsgeschwindigkeit und andererseits entgegengesetzt zur Strömungsgeschwindigkeit durch das strömende Medium laufen, so daß sich folgende Laufzeiten der Ultraschallimpulse ergeben:

$$T_{ab} = \frac{L}{c+v_m \cos\theta} \qquad (1)$$

$$T_{ba} = \frac{L}{c-v_m \cos\theta}, \qquad (2)$$

wobei $T_{ab}$ die Laufzeit eines Ultraschallimpulses mit einer Geschwindigkeitskomponente in Richtung der Strömungsgeschwindigkeit, $T_{ba}$ die Laufzeit eines Ultraschallimpulses mit einer Geschwindigkeitskomponente entgegengesetzt zur Strömungsgeschwindigkeit, $L$ der Abstand der beiden Ultraschallwandler voneinander, $c$ die Schallgeschwindigkeit in dem die Meßleitung durchströmenden Medium, $v_m$ die mittlere Geschwindigkeit des Mediums längs des Meßpfades, also der Verbindungslinie zwischen den Ultraschallwandlern, und $\theta$ der Winkel zwischen der Verbindungslinie der beiden Ultraschallwandler und der Strömungsrichtung ist.

Mit den Gleichungen 1 und 2 läßt sich die mittlere Geschwindigkeit des Mediums, wie folgt, berechnen

$$v_m = \frac{L}{2 \cdot \cos\theta} \left[ \frac{T_{ba} - T_{ab}}{T_{ba} \cdot T_{ab}} \right]. \qquad (3)$$

Gleichung 3 zeigt, daß die Schallgeschwindigkeit im Medium nicht in die Berechnung der Strömungsgeschwindigkeit des Mediums eingeht. Gemäß dieser Berechnung ist also die Strömungsgeschwindigkeit des Mediums unabhängig von der Schallgeschwindigkeit im Medium.

Ausgehend von dem eingangs beschriebenen Ultraschalldurchflußmeßverfahren ist es die Aufgabe der Erfindung, ein solches Ultraschalldurchflußmeßverfahren anzugeben, das eine verbesserte Meßgenauigkeit aufweist.

Die zuvor hergeleitete und aufgezeigte Aufgabe ist dadurch gelöst, daß auf der Grundlage der berechneten Schallausbreitung der von dem einen zum anderen Ultraschallwandler laufenden Ultraschallimpulse wenigstens ein Korrekturparameter ermittelt wird, die Berechnung der Schallausbreitung der von einem zum anderen Ultraschallwandler laufenden Ultraschallimpulse unter Berücksichtigung eines vorgegebenen Frequenzspektrums der Schwingungen der Ultraschallwandler erfolgt und die Strömungsgeschwindigkeit unter Berücksichtigung des ermittelten Korrekturparameters berechnet wird.

Zur Berechnung der Schallausbreitung der von einem zum anderen Ultraschallwandler laufenden Ultraschallimpulse werden also Systemparameter, wie die frequenzabhängige Dämpfung der Ultraschallimpulse im Medium oder/und die Schallgeschwindigkeit im Medium berücksichtigt, und zwar für ein vorgegebenes Frequenzspektrum. Das heißt, daß die Ermittlung des Korrekturparameters unter Berücksichtigung wenigstens eines Systemparameters nicht nur für eine einzige Frequenz, sondern für eine Mehrzahl von Frequenzen erfolgt. Bei dem Frequenzspektrum kann es sich einerseits um ein kontinuierliches Frequenzspektrum handeln, bei dem die einzelnen Frequenzen kontinuierlich aufeinanderfolgen, es kann jedoch auch ein diskretes Frequenzspektrum vorgesehen sein, das diskrete, voneinander beabstandete Frequenzen aufweist.

Alternativ oder zusätzlich zu den zuvor genannten Systemparametern, nämlich der frequenzabhängigen Dämpfung der Ultraschallimpulse im Medium und der Schallgeschwindigkeit im Medium, können weitere Systemparameter, wie der Durchmesser bzw. die Fläche des schwingungsaktiven Bereichs der Ultraschallwandler, die Dichte des Mediums, der Abstand der Ultraschallwandler voneinander und damit die Länge des Meßpfades usw., berücksichtigt werden. Dabei wird als der schwingungsaktive Bereich eines Ultraschallwandlers der Bereich des Ultraschallwandlers bezeichnet, der aufgrund seiner Schwingfähigkeit für die Aussendung bzw. den Empfang der Ultraschallimpulse verantwortlich ist. Die Größe und Form des schwingungsaktiven Bereichs des Ultraschallwandler ist unter anderem maßgeblich für die Charakteristik der erzeugten Ultraschallimpulse.

Als Korrekturparameter kann z. B. die erwartete Laufzeit der vom einen zum anderen Ultraschallwandler laufenden Ultraschallimpulse oder eine Verzögerung dieser Laufzeit vorgesehen sein. Vorzugsweise erfolgt dabei ein Ermittlung des Korrekturparameters bei einer angenommenen Strömung von Null, so daß - im Falle der Laufzeit als Korrekturparameter - aufgrund der nach der Korrektur der gemessenen Laufzeit erhaltenen Laufzeit ein direkter Rückschluß auf die Strömungsgeschwindigkeit des Mediums möglich ist. Es können zusätzlich auch weitere Korrekturparameter vorgesehen werden.

Um einen schnellen Zugriff auf die Werte für den Korrekturparameter, vorzugsweise nämlich in Echtzeit, zu erhalten, kann vorgesehen sein, daß zur Ermittlung des Korrekturparameters die Systemparameter in einer Matrix abgelegt werden. Dabei ist einer Kombination von zwei oder mehr Systemparametern genau ein Korrekturparameter zugeordnet. Da damit nur diskrete Systemparameter erfaßt werden, ist gemäß einer bevorzugten Weiterbildung der Erfindung vorgesehen, Zwischenwerte der Systemparameter über eine, vorzugsweise lineare, Interpolation zu berücksichtigen. Es kann jedoch auch vorgesehen sein, daß zur Ermittlung des Korrekturparameters eine Fit-Kurve als Funktion der Systemparameter verwendet wird, gegebenenfalls in Form einer exakten analytischen und/oder empirischen Formel. Damit steht ein kontinuierliches System zur Ermittlung des Korrekturparameters zur Verfügung.

Im einzelnen gibt es nun eine Vielzahl von Möglichkeiten, das erfindungsgemäße Ultraschalldurchflußmeßverfahren auszugestalten und weiterzubilden, wozu auf die dem Patentanspruch 1 nachgeordneten Patentansprüche sowie auf die nachfolgende Beschreibung eines bevorzugten Ausführungsbeispiels der Erfindung unter Bezugnahme auf die Zeichnung verwiesen wird. In der Zeichnung zeigt

- Fig. 1 schematisch das verwendete Koordinatensystem zur Berechnung des Schalldruckfeldes eines Ultraschallimpulses
- Fig. 2 die zeitliche Entwicklung eines von einem Ultraschallwandler in ein Medium ausgesandten Ultraschallimpulses,
- Fig. 3 schematisch die Ermittlung des Korrekturparameters für die Schallausbreitung unter Berücksichtigung eines vorgegebenen Frequenzspektrums der Schwingungen der Ultraschallwandler durch Fouriertransformation,
- Fig. 4 ermittelte Verzögerungszeiten in Abhängigkeit von der Schallgeschwindigkeit im Medium einerseits und dem Abstand der Ultraschallwandler voneinander andererseits und
- Fig. 5 schematisch den Ablauf eines Ultraschalldurchflußmeßverfahrens gemäß einem bevorzugten Ausführungsbeispiel der Erfindung.

In Fig. 1 ist der schwingungsaktive Bereich eines Ultraschallwandlers, von dem die Ultraschallimpulse ausgehen, schematisch als flache Scheibe dargestellt. Der lokale Druck *p* des mit dem Ultraschallwandler im Medium erzeugten Schalldruckfeldes kann in Abhängigkeit vom Abstand *r* vom Mittelpunkt der Scheibe und vom Winkel $\theta$

beschrieben werden, so daß für die zeitliche Entwicklung des Schalldruckfeldes gilt (Kinsler, Frey, Coppens, Sanders, Fundamentals of Acoustics, Third Edition, Wiley, S. 176):

$$p(r,\theta,t) = i\frac{\rho c U_o k}{2\pi}\iint_S \frac{e^{i(\omega t - kr')}}{r'}dS, \qquad (4)$$

wobei $t$ die Zeit, $\rho$ die Dichte des Mediums, $U_0$ die Amplitude der Schwingungen des schwingungsaktiven Bereichs des Ultraschallwandlers, $k$ die Wellenzahl, $\omega$ die Kreisfrequenz der Schwingungen des Ultraschallwandlers und $S$ die Fläche des schwingungsaktiven Bereichs des Ultraschallwandlers darstellt.

Der schwingungsaktive Bereich des Ultraschallwandlers bewegt sich mit einer bestimmten Geschwindigkeitsfunktion *u(t)* in Abstrahlrichtung der Ultraschallimpulse hin und her. Diese Geschwindigkeitsfunktion ist charakteristisch für einen jeden Ultraschallwandlertyp. Mit der Erkenntnis, daß es sich bei der Bewegung des schwingungsaktiven Bereichs der verwendeten Ultraschallwandler nicht um eine harmonische Schwingung handelt, sondern um eine Schwingung mit einem breiten Frequenzspektrum, kann für die Geschwindigkeitsfunktion geschrieben werden

$$u(t) = \sum_n F_n \, e^{in\omega t} \;, \qquad (5)$$

wobei die $F_n$ die Amplituden bei der jeweiligen Frequenz darstellen.

Die Geschwindigkeitsfunktion *u(t)* kann nun einer Fouriertransformation unterzogen werden, so daß die Komponenten $P_n(r, \theta, f_n)$ des Schalldruckfeldes im Frequenzbereich für jeden Fourierkoeffizienten $n$ erhalten werden. Für diese Komponenten können dann die Systemparameter zur Berechnung des Schalldruckfeldes in für sich grundsätzlich bekannter Weise berücksichtigt werden. Dies ist im folgenden für den Dämpfungskoeffizienten $\alpha$ exemplarisch ausgeführt:

Für den Dämpfungskoeffizienten gilt (Kinsler, Frey, Coppens, Sanders, Fundamentals of Acoustics, Third Edition, Wiley, S. 148):

$$\alpha = \frac{\omega^2}{2\rho c^3}\left[\frac{4}{3}\eta\right], \qquad (6)$$

wobei $\eta$ die dynamische Viskosität des Mediums darstellt.

Damit ergibt sich für die Komponenten $P_n$

$$P_n(r,\theta,f_n,\alpha_n) = P_n(r,\theta,f_n)\cdot e^{-\alpha_n r}, \qquad (7)$$

Nachdem entsprechendes für alle zu berücksichtigenden Systemparameter durchgeführt worden ist, wird durch inverse Fouriertransformation zurück in den Zeitbereich transformiert, so daß die zeitliche Entwicklung des Schalldruckfeldes $p(r, \theta, t, \alpha)$ erhalten wird. Eine Darstellung des Schalldruckfeldes bei vier voneinander verschiedenen Zeiten, also die zeitliche Entwicklung eines von einem Ultraschallwandler in das Medium ausgesandten Ultraschallimpulses, ist in Fig. 2 gezeigt.

Die Ermittlung des Korrekturparameters für die Schallausbreitung unter Berücksichtigung eines vorgegebenen Frequenzspektrums der Schwingungen der Ultraschallwandler durch Fouriertransformation, wie zuvor beschrieben, ist schematisch aus Fig. 3 ersichtlich. Dort ist dargestellt, daß neben der Berücksichtigung der Viskosität über den Dämpfungskoeffizienten $\alpha$ weitere Systemparameter, wie der Durchmesser $a$ des schwingungsaktiven Bereichs der Ultraschallwandler, die Schallgeschwindigkeit c im Medium, die Dichte $\rho$ des Mediums und die Länge L des Meßpfads, entsprechend dem Abstand der beiden Ultraschallwandler voneinander, berücksichtigt werden können. Die entsprechenden Abhängigkeiten des Korrekturparameters von den Systemparametern bzw. die Abhängigkeiten der Systemparameter untereinander sind dem Fachmann gut bekannt bzw. können von diesem in der Fachliteratur, wie dem schon genannten Lehrbuch "Kinsler, Frey, Coppens, Sanders, Fundamentals of Acoustics, Third Edition, Wiley" nachgeschlagen werden. Im Ergebnis lassen sich damit das resultierendes Schalldruckfeld $p_{res}$ sowie schließlich die Laufzeit $T$ der Ultraschallimpulse von einem zum anderen Ultraschallwandler ermitteln.

Eine Änderung des resultierenden Schalldruckfeldes $p_{res}$ entspricht einer Änderung der Laufzeit $T$ der Ultraschallimpulse längs des Meßpfades. Bei einer theoretisch angenommenen Durchflußgeschwindigkeit des Mediums durch die Meßleitung von Null läßt sich unter Einführung einer Verzögerungszeit $T_d$ für die Laufzeit schreiben

$$T = \frac{L}{c} + T_d \tag{8}$$

Die damit eingeführte Verzögerungszeit $T_d$ setzt sich aus zwei Zeiten zusammen:

$$T_d = T_{const} + \Delta T, \tag{9}$$

wobei die Zeit $T_{const}$ einen konstanten Zeitbeitrag zu der Verzögerungszeit darstellt und im wesentlichen aufgrund von Verzögerungen in der Elektronik des verwendeten Ultraschalldurchflußmeßgeräts und aufgrund von Verzögerungen in den Ultraschallwandlern herrührt. Die Zeit $\Delta T$ ist ein variabler Beitrag zu der Verzögerungszeit und wird im wesentlichen durch das Schalldruckfeld bestimmt. Wie oben dargestellt, ist die Verzögerungszeit nämlich nicht konstant, sondern eine Funktion der Schallgeschwindigkeit $c$, der Länge $L$ des Meßpfads, des Dämpfungskoeffizienten $\alpha$, dem Radius a des schwingungsaktiven Bereich des Ultraschallwandlers usw., so daß für die Verzögerungszeit gilt

$$T_d = T_d\,(c, L, \alpha, a, \ldots). \tag{10}$$

Für einen gegebenen Ultraschallwandlertyp ist der Durchmesser a bekannt. Wird der Einfluß der Dämpfung und weiterer Systemparameter außer der Schallgeschwindigkeit c und der Länge $L$ des Meßpfads vernachlässigt, so kann die Verzögerungszeit $T_d$ in Abhängigkeit von der Schallgeschwindigkeit c und der Länge $L$ berechnet werden. Die somit ermittelten Verzögerungszeiten sind im in Fig. 4 gezeigten Graphen dargestellt.

Mit dem Wissen um die konkreten Werte für die Verzögerungszeit $T_d$ in Abhängigkeit von der Schallgeschwindigkeit $c$ und der Länge $L$ für einen bestimmten Ultraschallwandlertyp läßt sich nun folgendes, schematisch in Fig. 5 dargestelltes Korrekturverfahren durchführen:

Das tatsächlich vorhandene Schalldruckfeld führt zu einer bestimmten Laufzeit $T$ der Ultraschallimpulse von einem zum anderen Ultraschallwandler. Diese Laufzeiten $T_{ab}$ und $T_{ba}$ in Strömungsrichtung bzw. entgegengesetzt dazu werden in Schritt I gemessen. Auf der Grundlage der gemessenen Laufzeiten $T_{ab}$ und $T_{ba}$ wird dann in Schritt II die Schallgeschwindigkeit $c$ z. B. unter Verwendung der Gleichungen 1 und 3 berechnet. Diese Berechnung erfolgt während des eigentlichen Ultraschalldurchflußmeßverfahrens in Echtzeit. Es ergibt sich

$$c = \frac{L - T_{ab} v_m \cos\theta}{T_{ab}}. \tag{11}$$

Mit der bekannten Länge $L$ des verwendeten Ultraschalldurchflußmeßgeräts kann dann in Schritt III die eigentliche Korrektur durchgeführt werden. Dazu ist gemäß dem vorliegend beschriebenen bevorzugten Ausführungsbeispiel der Erfindung in dem zur Durchführung des Ultraschalldurchflußmeßverfahrens verwendeten Ultraschalldurchflußmeßgerät eine Matrix für die Verzögerungszeit $T_d$ in Abhängigkeit der Länge $L$ und der Schallgeschwindigkeit c abgelegt. Jeweils einem Paar konkreter Werte für $L$ bzw. $c$ ist also genau ein Wert $T_d$ zugeordnet. Zwischenwert von $L$ bzw. $c$ werden mittels linearer Interpolation zwischen entsprechenden Werten für $T_d$ berücksichtigt. Mit der bekannten Länge $L$ und der ermittelten Schallgeschwindigkeit $c$ kann dann in Schritt III ein Beitrag der Verzögerungszeit aufgrund einer von der in einem Kalibriervorgang typischerweise im Werk ermittelten Kalibrierungslänge $L_{cal}$ abweichenden Länge $L$ des Meßpfades ermittelt werden:

$$\Delta T_L = T_d(L_{cal,}\ c_{cal}) - T_d(L,\ c_{cal}). \tag{12}$$

Aufgrund der in Echtzeit bestimmten Schallgeschwindigkeit kann entsprechendes auch für eine von der Schallgeschwindigkeit des für die Kalibrierung verwendeten Mediums abweichende Schallgeschwindigkeit erfolgen:

$$\Delta T_c = T_d\ (L,\ c_{cal})\text{-}T_d(L,\ c). \qquad (13)$$

Als korrigierte Verzögerungszeit $T_{d,corr}$ ergibt sich dann

$$T_{d,corr} = T_d\text{-}\Delta T_L\text{-}\Delta T_c. \qquad (14)$$

Unter Berücksichtigung der korrigierten Verzögerungszeit $T_{d,corr}$ kann dann in Schritt IV die längs des Meßpfades gemittelte Strömungsgeschwindigkeit $v_m$ berechnet werden.

Im vorliegend beschriebenen bevorzugten Ausführungsbeispiel der Erfindung ist zur Korrektur nur die Verzögerungszeit $T_d$ herangezogen worden. Dieser Vorgehensweise äquivalent ist die Berücksichtigung der gesamten Laufzeit $T$, die die Verzögerungszeit $T_d$ mit einschließt. Darüber hinaus kann natürlich eine Korrektur nicht nur über die Laufzeit, sondern auch über andere Parameter erfolgen.

## Patentansprüche

**1.** Ultraschalldurchflußmeßverfahren, zur Messung einer Strömungsgeschwindigkeit eines eine Meßleitung durchströmenden Mediums mittels zweier, in Strömungsrichtung des Mediums zueinander versetzt angeordneter Ultraschallwandler, wobei von beiden Ultraschallwandlern jeweils einerseits Ultraschallimpulse ausgesandt und andererseits von dem jeweilig anderen Ultraschallwandler ausgesandte Ultraschallimpulse empfangen werden und die Strömungsgeschwindigkeit auf der Grundlage der Laufzeiten der von dem einen bzw. dem anderen Ultraschallwandler empfangenen Ultraschallimpulse berechnet wird, **dadurch gekennzeichnet, daß** auf der Grundlage der berechneten Schallausbreitung der von dem einen zum anderen Ultraschallwandler laufenden Ultraschallimpulse wenigstens ein Korrekturparameter ermittelt wird, die Berechnung der Schallausbreitung der von einem zum anderen Ultraschallwandler laufenden Ultraschallimpulse unter Berücksichtigung eines vorgegebenen Frequenzspektrums der Schwingungen der Ultraschallwandler erfolgt und die Strömungsgeschwindigkeit unter Berücksichtigung des ermittelten Korrekturparameters berechnet wird.

**2.** Ultraschalldurchflußmeßverfahren nach Anspruch 1, **dadurch gekennzeichnet, daß** zur Ermittlung des Korrekturparameters als Systemparameter die, vorzugsweise in Echtzeit bestimmte, Schallgeschwindigkeit im Medium berücksichtigt wird.

**3.** Ultraschalldurchflußmeßverfahren nach Anspruch 1 oder 2, **dadurch gekennzeichnet, daß** zur Ermittlung des Korrekturparameters als Systemparameter die frequenzabhängige Dämpfung der Ultraschallimpulse im Medium berücksichtigt wird.

**4.** Ultraschalldurchflußmeßverfahren nach einem der Ansprüche 1 bis 3, **dadurch gekennzeichnet, daß** zur Ermittlung des Korrekturparameters die Systemparameter in einer Matrix abgelegt werden.

**5.** Ultraschalldurchflußmeßverfahren nach Anspruch 4, **dadurch gekennzeichnet, daß** Zwischenwerte der Systemparameter über eine Interpolation berücksichtigt werden.

**6.** Ultraschalldurchflußmeßverfahren nach einem der Ansprüche 1 bis 3, **dadurch gekennzeichnet, daß** zur Ermittlung des Korrekturparameters eine Fit-Kurve als Funktion der Systemparameter verwendet wird.

**7.** Ultraschalldurchflußmeßverfahren nach einem der Ansprüche 1 bis 6, **dadurch gekennzeichnet, daß** der Korrekturparameter bei einer angenommenen Strömung von Null ermittelt wird.

**8.** Ultraschalldurchflußmeßverfahren nach einem der Ansprüche 1 bis 7, **dadurch gekennzeichnet, daß** als Korrekturparameter die erwartete Laufzeit der von einem zum anderen Ultraschallwandler laufenden Ultraschallimpulse oder eine Verzögerung der Laufzeit der von einem zum anderen Ultraschallwandler laufenden Ultraschallimpulse ermittelt wird.

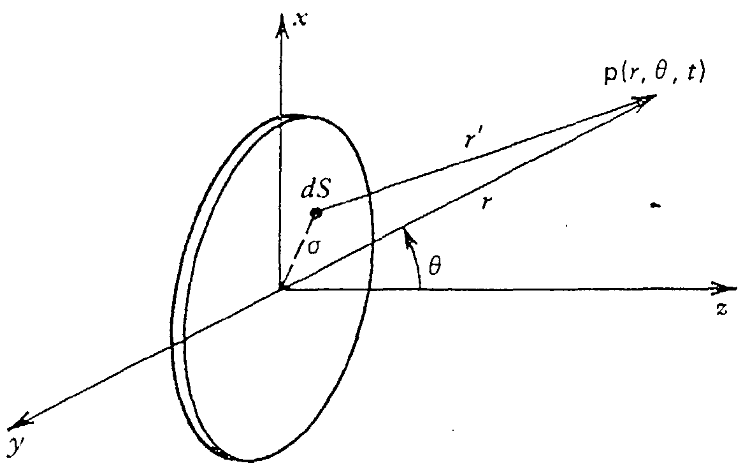


Fig. 1

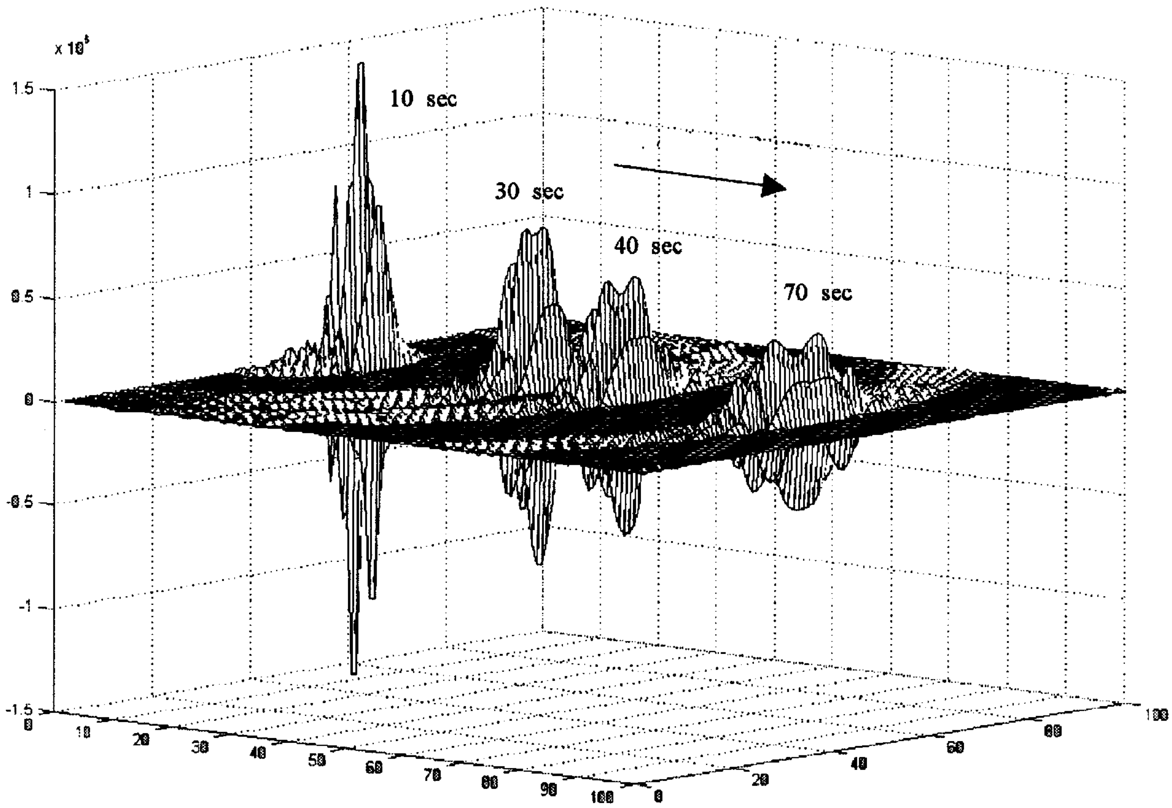
x 10^5
1.5
1
0.5
0
-0.5
-1
-1.5
10 sec
30 sec
40 sec
70 sec
0
10
20
30
40
50
60
70
80
90
100
0
20
40
60
80
100

Fig. 2

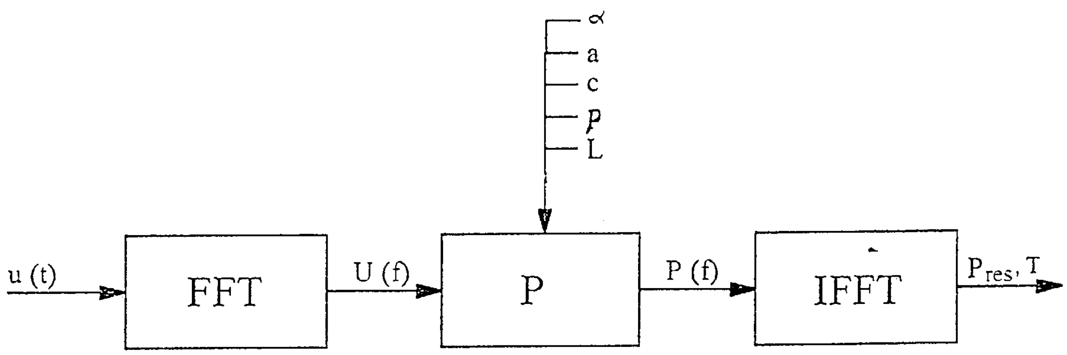


Fig. 3

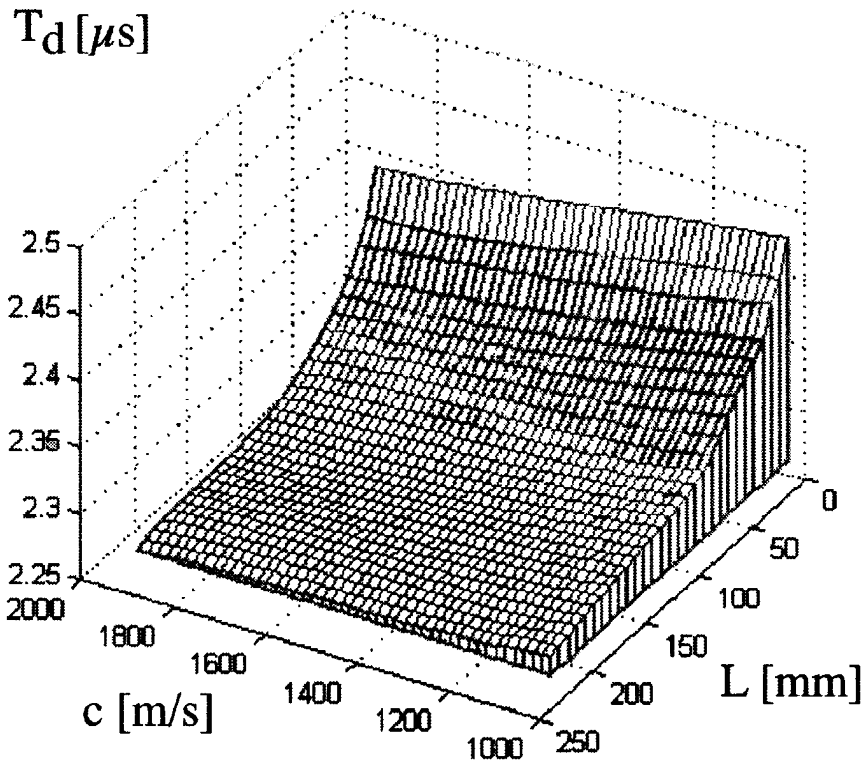
Td [μs]
2.5
2.45
2.4
2.35
2.3
2.25
2000
1800
1600
1400
1200
1000
c [m/s]
0
50
100
150
200
250
L [mm]

Fig. 4

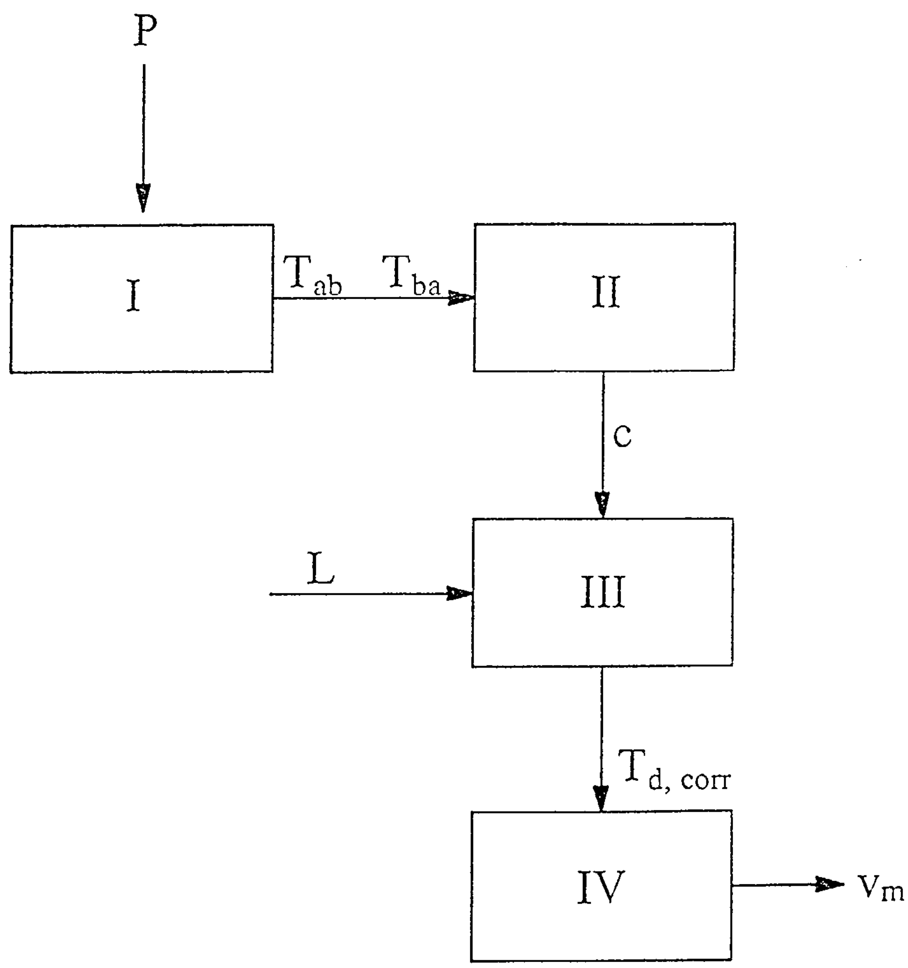


Fig. 5

Europäisches Patentamt

# EUROPÄISCHER RECHERCHENBERICHT

Nummer der Anmeldung
EP 03 00 5243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br><br><br><br>Y | DE 199 34 212 A (INST FRANCAIS DU PETROL)<br>17. Februar 2000 (2000-02-17)<br>* Seite 3, Zeile 36 - Seite 5, Zeile 8 *<br>* Seite 5, Zeile 60 - Seite 6, Zeile 61 *<br>* Ansprüche 1,2,5; Abbildungen * | 1,3-6,8<br><br><br><br><br>2,7 | G01F1/66 |
| X<br><br><br><br>Y | EP 1 113 247 A (GAZ DE FRANCE)<br>4. Juli 2001 (2001-07-04)<br>* Absatz [0035] - Absatz [0133];<br>Abbildungen 2,6,8,9 * | 1,4-6,8<br><br><br><br>2,7 | |
| X<br><br><br>Y<br>A | EP 0 312 224 A (PANAMETRICS)<br>19. April 1989 (1989-04-19)<br>* das ganze Dokument * | 1,4-6<br><br><br>2<br>8 | |
| Y | DE 34 38 976 A (FUJI ELECTRIC CO LTD)<br>9. Mai 1985 (1985-05-09)<br>* Seite 6, letzter Absatz - Seite 10,<br>letzter Absatz; Abbildungen * | 2,7 | RECHERCHIERTE SACHGEBIETE (Int.Cl.7) |
| A | US 5 493 916 A (BIGNELL NOEL)<br>27. Februar 1996 (1996-02-27)<br>* das ganze Dokument * | 1-8 | G01F |
| A | DE 33 31 519 A (ELSTER AG)<br>21. März 1985 (1985-03-21)<br>* das ganze Dokument * | 1,2 | |

Der vorliegende Recherchenbericht wurde für alle Patentansprüche erstellt

| Recherchenort | Abschlußdatum der Recherche | Prüfer |
|---|---|---|
| MÜNCHEN | 22. Oktober 2003 | Politsch, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 03 00 5243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2003

| Im Recherchenbericht angeführtes Patentdokument | Datum der Veröffentlichung | Mitglied(er) der Patentfamilie | Datum der Veröffentlichung |
|---|---|---|---|
| DE 19934212 A | 17-02-2000 | FR 2781565 A1 | 28-01-2000 |
| | | DE 19934212 A1 | 17-02-2000 |
| | | GB 2339907 A ,B | 09-02-2000 |
| | | JP 2000046854 A | 18-02-2000 |
| | | US 6546810 B1 | 15-04-2003 |
| EP 1113247 A | 04-07-2001 | FR 2803032 A1 | 29-06-2001 |
| | | EP 1113247 A1 | 04-07-2001 |
| EP 0312224 A | 19-04-1989 | US 4787252 A | 29-11-1988 |
| | | DE 3879852 D1 | 06-05-1993 |
| | | DE 3879852 T2 | 02-09-1993 |
| | | EP 0312224 A1 | 19-04-1989 |
| | | JP 1193617 A | 03-08-1989 |
| | | JP 7078437 B | 23-08-1995 |
| DE 3438976 A | 09-05-1985 | JP 1752792 C | 08-04-1993 |
| | | JP 4047770 B | 04-08-1992 |
| | | JP 60098313 A | 01-06-1985 |
| | | DE 3438976 A1 | 09-05-1985 |
| US 5493916 A | 27-02-1996 | AT 176317 T | 15-02-1999 |
| | | AU 668872 B2 | 23-05-1996 |
| | | WO 9300570 A1 | 07-01-1993 |
| | | CN 1072016 A ,B | 12-05-1993 |
| | | DE 69228306 D1 | 11-03-1999 |
| | | DE 69228306 T2 | 30-09-1999 |
| | | DK 591368 T3 | 13-09-1999 |
| | | EP 0591368 A1 | 13-04-1994 |
| | | ES 2126593 T3 | 01-04-1999 |
| | | GR 3029559 T3 | 30-06-1999 |
| | | IE 922039 A1 | 30-12-1992 |
| | | NZ 243294 A | 27-04-1995 |
| | | PL 169742 B1 | 30-08-1996 |
| | | SG 45212 A1 | 16-01-1998 |
| DE 3331519 A | 21-03-1985 | DE 3331519 A1 | 21-03-1985 |

EPO FORM P0461

Für nähere Einzelheiten zu diesem Anhang : siehe Amtsblatt des Europäischen Patentamts, Nr.12/82